# FASCICULE DE BREVET EUROPEEN

(11) **EP 3 577 357 B1**
(45) Date de publication et mention de la délivrance du brevet: **03.03.2021**
(21) Numéro de dépôt: 18705693.2
(22) Date de dépôt: 30.01.2018
(51) Int. Cl.: F16C 27/02, F16C 11/06, F16C 11/04, B22F 3/105, B22F 3/11, B22F 5/00, B22F 5/10, B64D 27/26

(54) **CHAPE DE TURBOMACHINE A FILTRE INTEGRE ET SON PROCEDE DE REALISATION**
TURBOMASCHINENGABELKOPF MIT EINGEBAUTEM FILTER UND VERFAHREN ZUR HERSTELLUNG DES GABELKOPFES
TURBOMACHINE CLEVIS WITH BUILT-IN FILTER AND METHOD OF PRODUCING SAID CLEVIS

(30) Priorité: 02.02.2017 FR 1750862
(43) Date de publication de la demande: 11.12.2019
(73) Titulaire: Safran Transmission Systems, 92700 Colombes (FR)
(72) Inventeur: MABIRE, Simon, Pierre, Mathieu, 77550 Moissy-Cramayel (FR)
(74) Mandataire: Gevers & Orès
(86) Numéro de dépôt international: PCT/FR2018/050211
(87) Numéro de publication internationale: WO 2018/142058

(56) Documents cités:
- WO-A1-2013/001238
- WO-A1-2015/053940
- WO-A2-2012/131233
- CN-U- 203 035 753
- FR-A1- 2 894 934
- FR-A1- 2 998 497
- JP-U- S5 880 615
- US-A1- 2003 063 826
- US-A1- 2010 329 597
- US-A1- 2011 176 757

## Description

### DOMAINE TECHNIQUE

La présente invention concerne une chape, en particulier de turbomachine, ainsi qu'un procédé de réalisation d'une telle chape.

### ETAT DE L'ART

L'état de la technique comprend les modèles d'utilité publiés sous les numéros CN-U-203 035 753 et JP-U-S58 80615, et les demandes de brevet publiées sous les numéros US-A1-2010/329597, WO-A2-2012/131233, US-A1-2011/176757, WO-A1-2015/053940, FR-A1-2 998 497, FR-A1-2 894 934, WO-A1-2013/001238 et US-A1-2003/063826.

Une turbomachine, telle qu'un turboréacteur, utilisée pour la propulsion des aéronefs comprend des machines auxiliaires nécessaires à son fonctionnement. Il s'agit par exemple de pompes de fluides pour actionner des organes de commande, de lubrification ou de carburant ainsi que de générateurs électriques. Ces machines sont montées en prise mécanique avec un boîtier d'engrenages qui est lui-même relié à un arbre du moteur par une liaison mécanique appropriée. Ce boîtier est communément désigné par son sigle, AGB (acronyme de l'anglais « *Accessory Gear Box* »), dans le domaine. Le boîtier d'engrenages est maintenu en suspension sur le carter du moteur par des dispositifs de suspension comportant des bielles reliées à des chapes du carter.

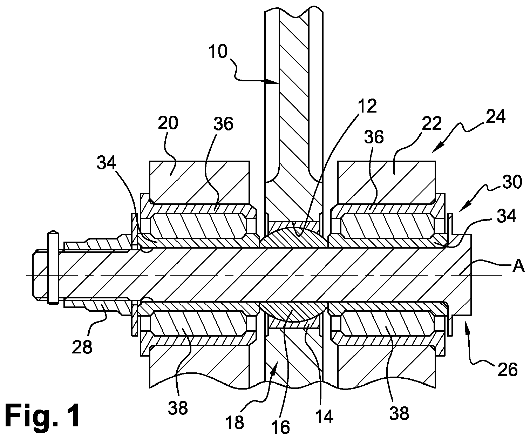

La figure 1 montre un dispositif de ce type. La bielle 10 comprend un corps intermédiaire de forme générale allongée et reliée à ses extrémités longitudinales à des têtes de liaison comportant des orifices dont les axes sont dans des plans sensiblement parallèles, le plan de coupe de la figure 1 passant par l'axe A de l'un de ces orifices 12. Cet orifice 12 reçoit une cage 14 cylindrique extérieurement, qui est maintenue par sertissage dans l'orifice 12. La surface interne de la cage 14 sert de guide à une douille à surface extérieure sphérique formant une rotule 16.

Chaque tête 18 de la bielle est montée entre les oreilles 20, 22 d'une chape femelle 24, une partie seulement de la bielle 10 étant visible sur la figure 1. La tête 18 visible est maintenue entre les deux oreilles 20, 22 par une vis 26 qui traverse ces dernières et la rotule 16. La vis 26 est elle-même immobilisée par un écrou 28.

La bielle 10 est immobilisée axialement selon la direction de la vis 26 par la rotule 16 qui, comme on le voit sur la figure, est en appui de chaque côté contre un palier 30 inséré dans l'orifice de chaque oreille 20,22. Grâce à ce montage avec rotule, la tête 18 peut pivoter librement autour de l'axe de la vis et autour de tout axe perpendiculaire à celui-ci dans les limites des butées définies par l'environnement. Le mouvement est limité notamment en fonction de l'intervalle, ménagé de part et d'autre, entre la tête de bielle 18 et les oreilles 20, 22 de la chape 24.

Au cours de la vie de l'AGB, des efforts, en particulier de direction parallèle à l'axe de la bielle 10, générés par les vibrations du moteur, transitent par le dispositif de suspension vers l'AGB et les accessoires qu'elle supporte. Ces sollicitations finissent par engendrer des dégradations sur l'AGB ou lesdits accessoires.

Une solution à ce problème consiste à équiper ce type de dispositif de moyens d'amortissement des vibrations. La solution illustrée par la figure 1 consiste à monter la vis 26 dans les orifices des oreilles 20, 22 de la chape par l'intermédiaire de paliers amortisseurs 30. L'orifice de chaque oreille reçoit un palier amortisseur 30 comportant des bagues annulaires interne 34 et externe 36 entre lesquelles s'étend un amortisseur annulaire 38 en élastomère.

Cependant, cette technologie présente des inconvénients liés, en particulier, à la tenue en température et à des produits liquides (polluants, solvants, kérosène, etc.) de l'amortisseur (dégradation de l'élastomère et variabilité de comportement dynamique). En effet, du fait de sa réalisation en élastomère, l'utilisation de l'amortisseur est limitée à des applications où la température ambiante est généralement inférieure à 200°C. De plus, les mécanismes de défaillance des élastomères sont mal formalisés, ce qui implique une fréquence élevée de rechange du palier pour remplacement dès l'apparition de la première fissure alors qu'il devrait pouvoir encore assurer sa fonction pour de nombreux cycles. WO-A2-2012/131233 montre une chape de suspension de turbomachine selon le préambule de la revendication 1.

### EXPOSE DE L'INVENTION

La présente invention propose un perfectionnement à la technologie décrite ci-dessus, qui représente une solution simple, efficace et économique, en particulier pour répondre au problème de tenue thermique précitée des moyens d'amortissement.

L'invention propose une chape, en particulier pour une turbomachine, comprenant un corps comportant des moyens de fixation à un carter et au moins un orifice de montage d'un axe d'articulation, ledit corps étant formé d'une seule pièce et comportant autour dudit au moins un orifice, une partie annulaire alvéolaire formant un filtre vibratoire et ayant une capacité de déformation en compression et/ou en flexion supérieure à celle du reste dudit corps.

Le filtre ou une partie de la chape peut ainsi être réalisé dans un matériau résistant à des températures élevées, par exemple supérieure à 200°C. Ceci est rendu possible par la structure alvéolaire présentant des propriétés de souplesse et en particulier des capacités de déformation en compression et/ou en flexion suffisantes pour filtrer un spectre vibratoire auxquelles le système suspendu est susceptible d"être exposé en fonctionnement.

La chape selon l'invention peut comprendre une ou plusieurs des caractéristiques ci-dessous, prises isolément les unes des autres ou en combinaison les unes avec les autres :
- la chape est au moins en partie métallique ou en matériau composite,
- ladite partie annulaire comprend une structure en forme de treillis,
- ledit corps comprend une partie principale alvéolaire, et
- ladite partie principale comprend une structure en forme de treillis.

La présente invention concerne également un dispositif de suspension, en particulier pour une turbomachine, comportant une chape telle que décrite ci-dessus, ce dispositif comportant en outre un ensemble comportant une rotule et une cage qui entoure la rotule et est frettée ou fixée dans l'orifice du corps de chape.

L'invention concerne encore une turbomachine, en particulier d'aéronef, comportant une telle chape ou un tel dispositif, en particulier pour la suspension d'une AGB à un carter de moteur.

L'invention concerne enfin un procédé de réalisation d'une chape, ou d'une partie de chape, telle que décrite ci-dessus, caractérisé en ce qu'il comprend une étape de fabrication additive de la chape, et en particulier de sa partie annulaire alvéolaire, par exemple par fusion sélective de lits de poudre.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en coupe d'un modèle particulier de bielle reliée à une chape, selon un art antérieur à la présente invention,
- la figure 2 est une vue très schématique partielle d'un modèle de chape selon l'invention,
- la figure 3 est une vue schématique en coupe d'un palier lisse pour chape, et
- la figure 4 est, par exemple, une vue très schématique d'une installation pour la fabrication additive de chape ou de partie de chape, ici selon la figure 2.

### DESCRIPTION DETAILLEE

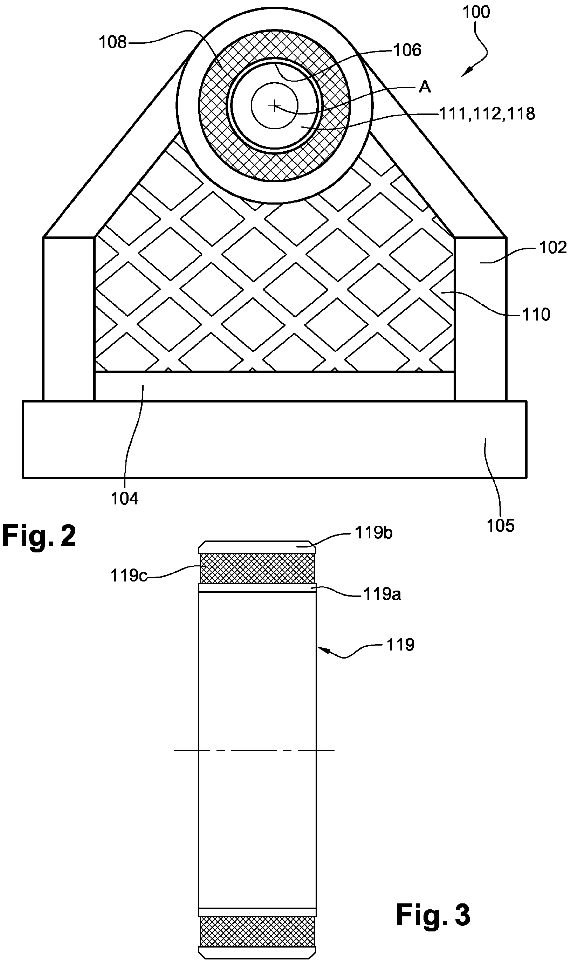

Une chape 100 selon l'invention, telle qu'illustrée à la figure 2, comprend un corps 102 comportant des moyens 104 de fixation à un carter de turbomachine et au moins un orifice 106 d'axe A. La chape peut être du type mâle et comprendre une unique oreille, ou du type femelle et comprendre deux oreilles sensiblement parallèles dont les axes des orifices sont alignés.

Le corps 102 est formé d'une seule pièce et comporte, autour de l'orifice 106, une partie annulaire alvéolaire 108 formant un filtre vibratoire et ayant une capacité de déformation en compression et/ou en flexion supérieure à celle du reste du corps

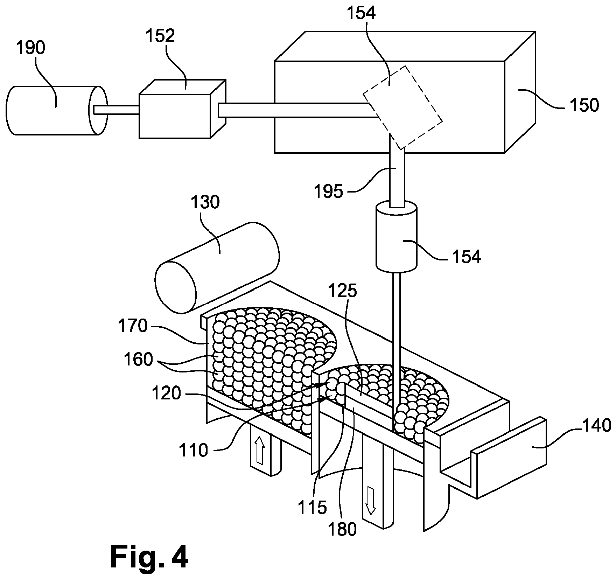

Le corps 102 et la partie annulaire 108 sont formées d'une seule pièce, de préférence en métal et par fabrication additive, comme cela sera décrit plus en détail en référence à la figure 4.

Les moyens de fixation 104 peuvent comprendre une platine d'appui sur le carter 105 et comportant des alésages de passage de vis ou analogue.

La partie annulaire 108 comprend de préférence une structure en forme de treillis, formé par un ensemble tridimensionnel de motifs (tels que des barres entrecroisées) liés les uns aux autres. Ces motifs sont séparés et espacés les unes des autres par des espaces qui forment les alvéoles de la partie 108.

Avantageusement, le corps 102 de la chape comprend une partie principale alvéolaire 110, qui peut avoir le même type de structure à savoir en forme en treillis. Comme évoqué dans ce qui précède, la partie 108 a une capacité de déformation en compression et/ou en flexion supérieure à celle de la partie 110. La structure alvéolaire ou en treillis de la partie 110 permet notamment de l'alléger et/ou de renforcer les zones contraintes.

La partie principale 110 est ici bordée par une bande de matière non alvéolaire rigidifiant l'ensemble.

La chape 100 peut être associée à un ensemble comportant une rotule 112 et une cage 111 pour former un dispositif de suspension. La cage 111, qui entoure la rotule 112, est frettée ou fixée par un autre procédé dans l'orifice 106 qui comporte ladite partie annulaire 108. Il n'est alors plus nécessaire de prévoir des paliers amortisseurs dans les orifices 114 des oreilles 116 de la chape. En variante, la rotule 112 et la cage 111 peuvent être remplacées par une simple douille cylindrique 118 de guidage. La douille 118 ou l'ensemble rotule 112 et cage 111 est destiné à être traversé par une vis 120 similaire à celle de la figure 1.

Un palier lisse peut être rapporté et fixé dans un orifice de chape.

La figure 3 illustre une variante de réalisation de l'invention dans laquelle la partie 108, la cage 111 et la rotule 112 (ou la partie 108 et la douille 118) du précédent mode de réalisation sont remplacées par un palier lisse 119 à filtre vibratoire intégré. Le palier 119 comprend deux bagues annulaires, respectivement interne 119a et externe 119b, s'étendant l'une autour de l'autre et reliées ensemble par une structure 119c alvéolaire ou en treillis formant le filtre vibratoire du fait de sa plus grande capacité de déformation en compression et/ou en flexion que les bagues. Le palier est de préférence formé d'une seule pièce. Les bagues 119a et 119 sont ainsi reliées entre elles de manière monobloc par la structure 119c qui peut comprendre des bras organisés en motifs géométriques répétés et ordonnés. L'ensemble est de préférence métallique. Le palier 119 peut également être formé d'une seule pièce avec la chape.

La chape 100 est avantageusement réalisée par fabrication additive. La figure 4 montre un exemple d'installation de réalisation d'une chape par fabrication additive, et en particulier par fusion sélective de lits de poudre via un faisceau de haute énergie.

La machine comprend un bac d'alimentation 170 contenant de la poudre d'un matériau tel qu'un alliage métallique, un rouleau 130 pour transvaser cette poudre depuis ce bac 170 et étaler une première couche 110 de cette poudre sur un support de construction 180.

La machine comprend également un bac de recyclage 140 pour récupérer la poudre usagée (en particulier non fondue ou non frittée) et la poudre en excès (en majeure partie), après étalement de la couche de poudre sur le support de construction 180. Ainsi, la majeure partie de la poudre du bac de recyclage est composée de poudre neuve. Aussi, ce bac de recyclage 140 est communément appelé par la profession bac de trop plein ou cendrier.

Cette machine comprend également un générateur 190 de faisceau énergétique (par exemple laser) 195, et un système de pilotage 150 apte à diriger ce faisceau 195 sur n'importe quelle région du support de construction 180 de façon à balayer n'importe quelle région d'une couche de poudre. La mise en forme du faisceau énergétique (laser) et la variation de son diamètre sur le plan focal se font respectivement au moyen d'un dilatateur de faisceau 152 et d'un système de focalisation 154, l'ensemble constituant le système optique.

Cette machine pour appliquer le procédé assimilable à un procédé de dépôt direct de métal ou DMD (acronyme de l'anglais *Direct Metal Deposition*) sur une poudre peut utiliser n'importe quel faisceau de haute énergie en place du faisceau laser 195, tant que ce faisceau est suffisamment énergétique pour dans le premier cas fondre ou dans l'autre cas former des cols ou ponts entre les particules de poudre et une partie du matériau sur lequel les particules reposent.

Le rouleau 130 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 150 comprend par exemple au moins un miroir 155 orientable sur lequel le faisceau laser 195 se réfléchit avant d'atteindre une couche de poudre dont chaque point de la surface se trouve située toujours à la même hauteur par rapport à la lentille de focalisation, contenue dans le système de focalisation 154, la position angulaire de ce miroir 155 étant pilotée par une tête galvanométrique pour que le faisceau laser balaye au moins une région de la première couche de poudre, et suive ainsi un profil de pièce pré-établi.

Cette machine fonctionne de la façon suivante. On dépose à l'aide du rouleau 130 une première couche 110 de poudre d'un matériau sur le support de construction 180, cette poudre étant transvasée depuis un bac d'alimentation 170 lors d'un mouvement aller du rouleau 130 puis elle est raclée, et éventuellement légèrement compactée, lors d'un (ou de plusieurs) mouvement(s) de retour du rouleau 130. L'excédent de poudre est récupéré dans le bac de recyclage 140. On porte une région de cette première couche 110 de poudre, par balayage avec le faisceau laser 195, à une température supérieure à la température de fusion de cette poudre (température de liquidus). La tête galvanométrique est commandée selon les informations contenues dans la base de données de l'outil informatique utilisé pour la conception et la fabrication assistées par ordinateur de la pièce à fabriquer. Ainsi, les particules de poudre 160 de cette région de la première couche 110 sont fondues et forment un premier cordon 115 d'un seul tenant, solidaire avec le support de construction 180. A ce stade, on peut également balayer avec le faisceau laser plusieurs régions indépendantes de cette première couche pour former, après fusion et solidification de la matière, plusieurs premiers cordons 115 disjoints les uns des autres. On abaisse le support 180 d'une hauteur correspondant à l'épaisseur déjà définie de la première couche (entre 20 et 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du support 180 est une valeur invariable au jeu près. On dépose ensuite une deuxième couche 120 de poudre sur la première couche 110 et sur ce premier cordon 115, puis on chauffe par exposition au faisceau laser 195 une région de la deuxième couche 120 qui est située partiellement ou complètement au-dessus de ce premier cordon 115, de telle sorte que les particules de poudre de cette région de la deuxième couche 120 sont fondues, avec au moins une partie du premier cordon 115, et forment un deuxième cordon d'un seul tenant ou consolidé 125, l'ensemble de ces deux cordons 115 et 125 formant un bloc d'un seul tenant. A cet effet, le deuxième cordon 125 est avantageusement déjà entièrement lié dès qu'une partie de ce deuxième cordon 125 se lie au premier élément 115. On comprend que selon le profil de la pièce à construire, et notamment dans le cas de surface en contre-dépouille, il se peut que la région précitée de la première couche 110 ne se trouve pas, même partiellement, en dessous de la région précitée de la deuxième couche 120, de sorte que dans ce cas le premier codon 115 et le deuxième cordon 125 ne forment alors pas un bloc d'un seul tenant. On poursuit ensuite ce processus de construction de la pièce couche par couche en ajoutant des couches supplémentaires de poudre sur l'ensemble déjà formé. Le balayage avec le faisceau 195 permet de construire chaque couche en lui donnant une forme en accord avec la géométrie de la pièce à réaliser, par exemple les structures en treillis précitées. Les couches inférieures de la pièce se refroidissent plus ou moins vite au fur et à mesure que les couches supérieures de la pièce se construisent.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N2), l'argon (Ar) ou l'hélium (He) avec ou non addition d'une faible quantité d'hydrogène (H2) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi, la fusion sélective ou le frittage sélectif par laser permet de construire avec une bonne précision dimensionnelle des pièces faiblement polluées dont la géométrie en trois dimensions peut être complexe.

La fusion sélective ou le frittage sélectif par laser utilise en outre de préférence des poudres de morphologie sphérique, propres (c'est-à-dire non contaminées par des éléments résiduels provenant de la synthèse), très fines (la dimension de chaque particule est comprise entre 1 et 100 µm et de préférence entre 45 et 90 µm), ce qui permet d'obtenir un excellent état de surface de la pièce finie.

La fusion sélective ou le frittage sélectif par laser permet par ailleurs une diminution des délais de fabrication, des coûts et des frais fixes, par rapport à une pièce moulée, injectée ou usinée dans la masse.

## Revendications

1. Chape (100), en particulier pour une turbomachine, comprenant un corps (102) comportant des moyens (104) de fixation à un carter (105) et au moins un orifice (106) de montage d'un axe d'articulation, **caractérisée en ce que** ledit corps est formé d'une seule pièce et comporte, autour dudit au moins un orifice, une partie annulaire alvéolaire (108) formant un filtre vibratoire et ayant une capacité de déformation en compression et/ou en flexion supérieure à celle du reste dudit corps.

2. Chape (100) selon la revendication 1, dans laquelle elle est au moins en partie métallique.

3. Chape (100) selon la revendication 1 ou 2, dans laquelle ladite partie annulaire comprend une structure en forme de treillis.

4. Chape (100) selon l'une des revendications précédentes, dans laquelle ledit corps (102) comprend une partie principale alvéolaire (110).

5. Chape (100) selon la revendication précédente, dans laquelle ladite partie principale (110) comprend une structure en forme de treillis.

6. Dispositif de suspension, en particulier pour une turbomachine, comportant une chape (100) selon l'une des revendications précédentes, ce dispositif comportant en outre un ensemble comportant une rotule (112) et une cage (111) qui entoure la rotule et est frettée ou fixée dans l'orifice (106) du corps de chape.

7. Procédé de réalisation d'une chape, ou d'une partie de chape, selon l'une des revendications 1 à 5, **caractérisé en ce qu'**il comprend une étape de fabrication additive de la chape (100), et en particulier de sa partie annulaire alvéolaire (108), par exemple par fusion sélective de lits de poudre.

## Patentansprüche

1. Gabelkopf (100), insbesondere für eine Turbomaschine, umfassend einen Körper (102), der Mittel (104) zum Befestigen an einem Gehäuse (105) und mindestens eine Öffnung (106) zum Montieren einer Gelenkachse umfasst, **dadurch gekennzeichnet, dass** der Körper aus einem einzigen Stück gebildet ist, und um die mindestens eine Öffnung herum ein ringförmiges Zellenteil (108) umfasst, das ein Schwingungsfilter bildet und eine Druck- und/ oder Biegeverformungskapazität aufweist, die größer als jene des restlichen Körpers ist.

2. Gabelkopf (100) nach Anspruch 1, wobei er mindestens teilweise metallisch ist.

3. Gabelkopf (100) nach Anspruch 1 oder 2, wobei das ringförmige Teil eine Struktur in Gitterform umfasst.

4. Gabelkopf (100) nach einem der vorstehenden Ansprüche, wobei der Körper (102) ein Zellenhauptteil (110) umfasst.

5. Gabelkopf (100) nach dem vorstehenden Anspruch, wobei das Hauptteil (110) eine Struktur in Gitterform umfasst.

6. Aufhängungsvorrichtung, insbesondere für eine Turbomaschine, einen Gabelkopf (100) nach einem der vorstehenden Ansprüche umfassend, wobei diese Vorrichtung weiter eine Einheit beinhaltet, die ein Kugelgelenk (112) und einen Käfig (111) umfasst, der das Kugelgelenk umgibt und in der Öffnung (106) des Gabelkopfkörpers geschrumpft oder befestigt ist.

7. Verfahren zur Fertigung eines Gabelkopfes, oder eines Teils eines Gabelkopfes, nach einem der Ansprüche 1 bis 5, **dadurch gekennzeichnet, dass** es einen Schritt zur additiven Herstellung des Gabelkopfes (100), und insbesondere seines ringförmigen Zellenteils (108), beispielsweise durch selektives Schmelzen von Pulverbetten umfasst.

## Claims

1. Clevis (100), in particular for a turbomachine, comprising a body (102) comprising means (104) of attachment to a casing (105) and at least one aperture (106) for fitting a hinge pin, **characterised in that** said body is formed in one piece and comprises, about said at least one aperture, a honeycomb-type annular portion (108) forming a vibration filter and having a compressive and/or flexural strain capacity greater than that of the rest of said body.

2. Clevis (100) according to claim 1, wherein it is at least partially metal.

3. Clevis (100) according to claim 1 or 2, wherein said annular portion comprises a mesh-shaped structure.

4. Clevis (100) according to one of the preceding claims, wherein said body (102) comprises a main honeycomb-type portion (110).

5. Clevis (100) according to the preceding claim, wherein said main portion (110) comprises a mesh-shaped structure.

6. Suspension device, in particular for a turbomachine, comprising a clevis (100) according to one of the preceding claims, this device further comprising an assembly comprising a ball (112) and a cage (111) which surrounds the ball and is banded or attached in the aperture (106) of the clevis body.

7. Method of producing a clevis, or a clevis portion, according to one of claims 1 to 5, **characterised in that** it comprises a step of additive manufacturing the clevis (100), and in particular of the honeycomb-type annular portion (108) thereof, for example by selective melting of powder beds.
